(19) Europäisches Patentamt
European Patent Office
Office européen des brevets

(11) **EP 1 835 495 A1**

(12) **EUROPEAN PATENT APPLICATION**

(43) Date of publication:
**19.09.2007 Bulletin 2007/38**

(51) Int Cl.:
***G11B 7/09*** (2006.01)

(21) Application number: **07104225.3**

(22) Date of filing: **15.03.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK YU**

(30) Priority: **16.03.2006 JP 2006072499
07.03.2007 JP 2007057837**

(71) Applicant: **Ricoh Company, Ltd.
Tokyo 143-8555 (JP)**

(72) Inventor: **Matsumoto, Ippei
c/o Ricoh Company, Ltd.
Tokyo 143-8555 (JP)**

(74) Representative: **Barz, Peter
Patentanwalt
Kaiserplatz 2
80803 München (DE)**

(54) **Optical recording apparatus**

(57)    The present invention provides an optical recording apparatus having an information recording unit configured to record information in recording guide grooves formed on a surface of a multilayered optical recording medium by irradiating the optical recording medium while scanning the recording guide grooves with a light beam to change optical properties of the optical recording medium, wherein the multilayered optical recording medium comprises a first laminate having a first substrate with a spiral recording guide groove formed on a surface thereof and at least a first recording layer formed on the first substrate, and a second laminate having a second substrate with a spiral recording guide groove formed on a surface thereof in the reverse direction to the recording guide groove of the first laminate and at least a second recording layer formed on the second substrate, and the first laminate and the second laminate are bonded such that the first substrate and the second substrate respectively constitute an external surface of the optical recording medium; a determining unit configured to determine a signal amplitude in the recording guide grooves of the second laminate to determine whether or not the determined signal amplitude is more than a specified amplitude value which has been preliminarily stored in the optical recording apparatus, and a recording condition changing unit configured to change recording conditions of the information recording unit when the determined signal amplitude is determined as being more than the specified amplitude value.

**EP 1 835 495 A1**

**Description**

BACKGROUND OF THE INVENTION

Field of the Invention

The present invention relates to an optical recording apparatus used for recordable compact disc (CD-R/RW), DVD-R/RW, DVD+R/+RW and the like.

Description of' the Related Art

As optical recording apparatuses, there are known DVDs which are writable once (may be referred to as "DVD Write Once") such as DVD-RAM-WO, DVDR, and DVD+R, and DVDs (Digital Versatile Discs) which are writable two or more times such as DVD-RAM, DVD-RW, and DVD+RW.

When there are differences in recording sensitivity in adjacent tracks in such various optical recording media, aiming to provide an optical recording method which allows for achieving controlling a width of a recording mark to an optimum width, reducing occurrences of inter-track crosstalk at the time of reproducing signals to the minimum level and reducing occurrences of cross-erase at the time of recording signals to the minimum level, and achieving high-density technology, for example, Japanese Patent Application Laid-Open (JP-A) No. 2002-197658 proposes an optical recording method in which a fourth test pattern constituted by a plurality of recording marks 4 each having a different width is recorded in a fourth area 14 of a first track Tr (n - 1) in an optical recording medium, a third test pattern 3 constituted by a plurality of recording marks 3 each having a different width is recorded in a third area 13 which is not adjacent to the fourth area 14 in a second track Tr (n) which is adjacent to the first track Tr (n - 1), and the optimum recording conditions can be determined from a signal obtained by reproducing the first track Tr (n - 1) and the second track Tr (n).

The proposal, however, aims to solve problems with recording and reproducing of information on a typical recording medium which has one recording layer, and no description is found in the proposal on problems with recording and reproducing of information on a multilayered optical recording medium having a plurality of recording layers which is being increasingly employed to achieve high-density recording.

Accordingly, in an optical recording medium, in particular, in a multilayered optical recording medium having two or more recording layers, servo properties and recording conditions vary depending on configuration differences in optical recording media attributable to differences in method for producing these optical recording media, and thus optimum recording cannot be performed using a conventional optical recording apparatus. As the result, there is a problem that recording quality is degraded to disable recording and reproducing.

BRIEF SUMMARY OF THE INVNETION

The present invention aims to provide an optical recording apparatus which allows for achieving optimum recording by controlling impacts of configuration differences of optical recording media which are attributable to differences in methods of producing optical recording media on servo signals.

The means to solve aforesaid problems are as follows:

< 1 > An optical recording apparatus having an information recording unit configured to record information in recording guide grooves formed on a surface of an optical recording medium by irradiating the optical recording medium while scanning the recording guide grooves with a light beam to change optical properties of the optical recording medium, a determining unit configured to determine a signal amplitude in the recording guide grooves to determine whether or not the determined signal amplitude is more than a specified amplitude value which has been preliminarily stored in the optical recording apparatus, and a recording condition changing unit configured to change recording conditions of the information recording unit when the determined signal amplitude is determined as being more than the specified amplitude value.

< 2 > The optical recording medium according to the item < 1 >, wherein a site irradiated with the light beam used when scanning the recording guide grooves is set so as to cover the recording guide grooves.

< 3 > The optical recording apparatus according to any one of the items < 1 > to < 2 >, wherein the recording condition changing unit is configured to change the servo property at the time of recording.

< 4 > The optical recording apparatus according to the item < 3 >, wherein the recording condition changing unit is configured to change the tracking servo property at the time of recording..

< 5 > The optical recording apparatus according to the item < 4 >, wherein the recording condition changing unit is configured to change the offset value to be inserted to a tracking error signal at the time of recording.

< 6 > The optical recording apparatus according to the item < 5 >, wherein the information recording unit is configured to record information by changing the recording power of a recording light beam used during recording, and the recording condition changing unit is configured to change an offset value to be inserted to the tracking error signal used during recording is changed in accordance with the recording power.

< 7 > The optical recording apparatus according to the item < 4 >, wherein the recording condition changing unit is configured to change a signal ratio which is a ratio between a signal generated by a reflected light from the light beam irradiation site for recording to change optical properties of an optical recording medium when information is recorded thereon and a signal generated by a reflected light from the light beam irradiation site for scanning the recording guide grooves with the light beam.

< 8 > The optical recording apparatus according to the item < 7 >, wherein the information recording unit is configured to record information by changing the recording power of the recording light beam used during recording, and the recording condition changing unit is configured to change the signal ratio in accordance with the recording power.

< 9 > The optical recording apparatus according to any one of the items < 1 > to < 2 >, wherein the recording condition changing unit is configured to change an emission waveform used for the recording light beam.

< 10 > The optical recording apparatus according to any one of the items < 1 > to < 9 >, wherein the optical recording medium is a multilayered optical recording medium having two or more recording layers.

< 11 > The optical recording apparatus according to the item < 10 >, wherein the multilayered optical recording medium comprises a first laminate having a first substrate with a spiral recording guide groove formed on a surface thereof and at least a first recording layer formed on the first substrate, and a second laminate having a second substrate with a spiral recording guide groove formed on a surface thereof in the reverse direction to the recording guide groove of the first laminate and at least a second recording layer formed on the second substrate, and the first laminate and the second laminate are bonded such that the first substrate and the second substrate respectively constitute an external surface of the optical recording medium; and when a signal amplitude value in a recording guide groove of the second laminate determined by the determining unit is more than the specified amplitude value, the recording condition changing unit is configured to change an offset value to be inserted to a tracking error signal used at the time of recording information on the second laminate and to change a signal ratio which is a ratio between a signal generated by a reflected light from a light beam irradiation site for recording to change optical properties of the multilayered optical recording medium and a signal generated by a reflected light from a light beam irradiation site for scanning the recording guide groove with a light beam.

The optical recording apparatus has less impact on tracking servo property even with signals flowing over from the recording guide groove.

BRIEF DESCRIPTION OF THE SEVERAL VIEWS OF THE DRAWINGS

FIG. 1 is a view showing one example of a two-layered optical recording medium produced by an inverse lamination (IS) method.

FIG. 2 is a view showing one example of a two-layered optical recording medium produced by 2-P process.

FIG. 3 is a schematic view of an optical pickup device.

FIG. 4 is a view showing the arrangement of the main beam and a sub-beam collected on a recording layer surface.

FIG. 5 is a view exemplarily showing three dual-split light receiving devices each detecting the main beam and the sub-beam and signal computing unit.

FIG. 6 is a view exemplarily showing the arrangement of the main beam and the sub-beam collected on a recording layer surface of a two-layexed optical recording medium.

FIG. 7 is another view exemplarity showing the arrangement of the main beam and the sub-beam collected on a recording layer surface of a twa-layered optical recording medium.

FIG. 8 is a view showing the method of changing recording conditions in an optical recording apparatus of Comparative Example 1.

FIG. 9 is a view showing the method of changing recording conditions in an optical recording apparatus of Example 1.

FIG. 10 is a view showing the method of changing recording conditions in an optical recording apparatus of Example 2.

FIG. 11 is a view showing the method of changing recording conditions in an optical recording apparatus of Example 3.

FIG. 12 is a view showing the method of changing recording conditions in an optical recording apparatus of Example 4.

FIG. 13 is a functional block diagram exemplarily showing core parts of an optical recording apparatus.

FIG. 14 is a schematic view of an information processing unit using the optical recording apparatus shown in FIG. 13.

## DETAILED DESCRIPTION OF THE INVENTION

The optical recording apparatus of the present invention has at least an information recording unit, a determining unit, and a recording condition changing unit, and further has other units in accordance with the intended use.

The information recording unit is configured to record information on a recording guide groove (groove G) formed on an optical recording medium by irradiating the optical recording medium with a laser light while scanning the optical recording medium with a light beam to induce optical properties to the optical recording medium. The information recording unit is not particularly limited, and examples thereof include typical information recording units used for the same optical recording media as CD-R/RW drives, DVDs- R, DVDs-RW, and DVD+RW drives. Specific examples thereof include optical pickup.

The determining unit is configured to determine a signal amplitude in the recording guide grooves to determine whether or not the determined signal amplitude is more than a specified amplitude value which has been preliminarily stored in the optical recording apparatus, and examples thereof include read amplifiers, and CPU. The preliminarily specified amplitude value is stored, for example, in ROMs and RAMs of optical recording apparatuses.

The determining unit can easily determine configuration differences in production method of a two-layered optical recording medium, which will be described hereinafter, between inverse lamination (IS) method and 2P method.

The recording condition changing unit is configured to change recording conditions when the determined amplitude value is more than the preliminarily determined amplitude value. For example, (1) a unit configured to change servo properties, particularly, tracking servo property, (2) a unit configured to change the offset value to be inserted to a tracking error signal, (3) a unit configured to change the ratio between a signal generated by a reflected light beam from a light beam irradiation site for recording and signals based on a reflected light beam from a light beam irradiation site for scanning, and (4) a unit configured to change an emission waveform of a recording light beam are exemplified. Examples of the recording condition changing unit include a servo unit, a laser controller, and a computing unit such as CPU of an optical recording apparatus having a function for preparing an emission waveform The servo unit and the laser controller will be described in detail below.

< Optical Recoding Medium >

As an optical recording medium used for the optical recording apparatus of the present invention, a multilayered optical recording medium having two recording layers, particularly, DVD+R/-R, is preferably exemplified.

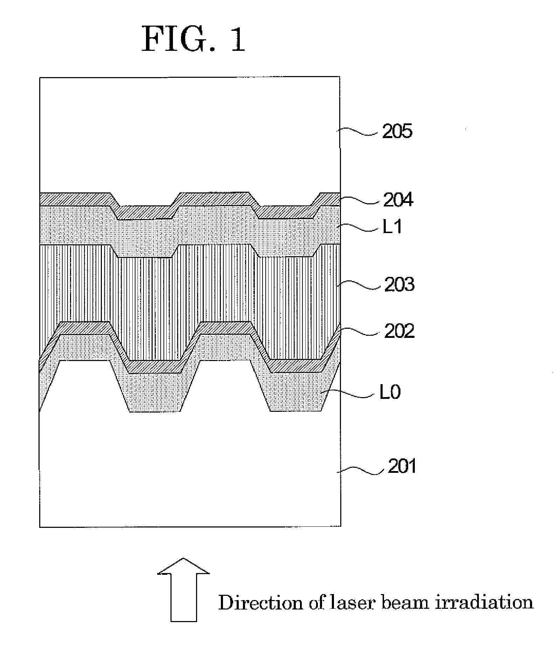

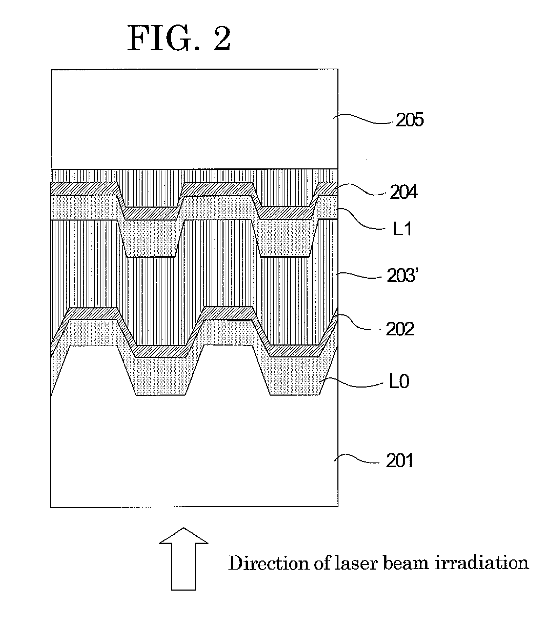

For such a multilayered optical recording medium, as shown in FIGS. 1 and 2, an optical recording medium is preferable which has a configuration having a first substrate 201, a first recording layer L0, a first reflective layer 202, an adhesive layer 203 or a second recording guide groove-formed layer 203', a second recording layer L1, a second reflective layer 204, and a second substrate or a protective substrate 205 as viewed from laser beam irradiation side. The recording laser beam or the incident laser beam is made incident on the optical recording medium from the first substrate 201 side.

- First Substrate -

The first substrate 201 must be transparent to the used laser when information is recorded or reproduced from the substrate side, however, when information is recorded or reproduced from the recording layer side, the first substrate is not necessarily transparent to the used laser.

Examples of materials used for the first substrate 201 include plastics such as polyester resins, acrylic resins, polyamide resins, polycarbonate resins, polyolefin resins, phenol resins, epoxy resins, and polyimide resins; or glass, ceramics, and metals.

On the surface of the substrate, a preformat such as a guide groove and a guide pit for tracking, and an address signal may be formed.

- Recording Layer -

The recording layer is the one that some optical changes are induced by irradiating the recording layer with a laser beam and information can be recorded by the use of the optical change. For a material of the recording layer, a material containing an organic dye as the main component is used. Here, the main component means that the material contains a sufficient amount of organic dye required to recording and reproducing information on the optical recording medium, however, typically, only an organic dye is used, excluding a small amount of additives which are suitably added in accordance with the intended use.

The organic dye is not particularly limited and may be suitably selected in accordance with the intended use, and examples thereof include azo dyes, formazan dyes, dipyrromethene dyes, (poly)methyne dyes, naphtalocyanine dyes, phthalocyanine dyes, tetraazaporphyrin dyes, squarylium dyes, chloconium dyes, pyrylium dyes, naphthoquinone dyes, anthraquinone dyes (indanthrene dyes), xanthene dyes, triphenylmethane dyes, azulene dyes, tetrahydrocoline dyes, phenanthrene dyes, triphenothiazine dyes, or metal complexes thereof. Of these, azo(metalchelate) dyes, formazan (metalchelate) dyes, squarylium(metalchelate) dyes, dipyrromethene(metalchelate) dyes, trimethynecyanine dyes, and tetraazaporphyrin dyes are particularly preferable.

With respect to thermal decomposition property of the dye, the decomposition starting temperature is preferably 100°C to 360°C, and more preferably 100°C to 350°C. When the decomposition starting temperature is more than 360°C, recording pits may not be satisfactorily formed at the time of recording to degrade the jitter property. When the decomposition starting temperature is less than 100°C, the storage stability of the disc may degrade.

For the purpose of improving optical properties, recording sensitivity, signal properties and the like, other organic dyes, metals, metal compounds may be mixed in the dye, or a dye layer and a layer composed of the other organic dyes, metals, and metal compounds may be formed in a laminate structure.

Examples of the metal or metal compound include In, Te, Bi, Se, Sb, Ge, Sn, Al, Be, $TeO_2$, SnO, As, and Cd. Each of these metals and metal compounds may be respectively dispersed and mixed in the dye or may be formed in a laminate structure.

Further, various materials such as polymer materials including ionomer resin, polyamide resin, vinyl resin, natural polymer, silicone, and liquid rubber or silane coupling agent may be dispersed and mixed in the dye. For the purpose of improving the properties, a stabilizer such as transition metal complex, dispersing agent, flame retardant, lubricant, antistatic agent, surfactant, and plasticizer and the like may be used together with the above-noted metals or metal compounds.

The recording layer can be formed by a typical method such as deposition method, sputtering method, CVD method, solvent coating method. When a solvent coating method is employed, the dye is dissolved in an organic solvent, and a recording layer can be formed by applying the solvent over a surface of the substrate by a common coating method such as spray coating, roller coating, dipping coating, spin-coating.

The organic solvent is not particularly limited and may be suitably selected in accordance with the intended use. Examples thereof include alcohols such as methanol, ethanol, and isopropanol; ketones such as acetone, methyl ethyl ketone, and cyclohexanone; amides such as N,N-dimethylformamide and N,N-dimethylacetamide; sulfoxide such as dimethylsulfoxide; ethers such as tetrahydrofuran, dioxane, diethylether, and ethyleneglycol monomethylether; esters such as methyl acetate and ethyl acetate; halogenated hydrocarbons such as chloroform, methylene chloride, dichloroethane, carbon tetrachloride, and trichloroethane; aromatics such as benzene, xylene, monochlorobenzene, and dichlorobenzene; cellosolve such as methoxy ethanol, ethoxy ethanol; and hydrocarbons such as hexane, pentane, cyclohexane, and methyl cyclohexane. Each of these may be used alone or in combination with two or more.

The thickness of the recording layer is preferably 10 nm to 10 $\mu$m, and more preferably 20 nm to 200 nm.

- Reflective Layer -

Examples of material used for the reflective layer include metals and semimetals exhibiting high reflectivity corrosion resistance such as Au, Ag, Cr, Ni, Al, Fe, and Sn.. Of these, from the perspective of reflectance and productivity, Au, Ag, and Al are particularly preferable. Each of these metals and semimetals may be used alone or in combination with two or more as an alloy.

Examples of the method of forming the reflective layer include deposition method, and sputtering method. The thickness of the reflective layer is 5 nm to 500 nm, and more preferably 10 nm to 300 nm.

- Adhesive Layer -

Material used for the adhesive layer is not particularly limited as long as a material capable of bonding two optical recording media. In view of productivity, an ultraviolet curable adhesive or a hot-melt adhesive is preferably used. For the second recording guide groove-formed layer, an ultraviolet curable resin is preferably used. In this case, a material suitable for separating a stamper used for forming the second recording guide groove therefrom is preferable.

It is preferable to provide with an undercoat layer to prevent the first reflective layer from eroding.

The undercoat layer is provided for the purposes of (1) improving the adhesiveness, (2) serving as a barrier to water or gas, (3) improving the storage stability of a recording layer, (4) increasing the reflectance, (5) protecting substrates from solvents, (6) forming guide grooves, guide pits, and a preformat, and the like.

For the purpose of (1), various polymer compounds such as ionomer resins, polyamide resins, vinyl resins, natural resins, natural polymers, silicones, and liquid rubbers or silane coupling agents can be used.

For the purposes of (2) and (3), besides the polymer materials set forth above, inorganic compounds such as SiO, MgF, $SiO_2$, TiO, ZnO, TiN, and SiN can be used, and further, metals or semimetals such as Zn, Cu, Ni, Cr, Ge, Se, Au, Ag, and Al can be used.

For the purpose of (4), metals such as Al, Au, and Ag and organic thin layers each having metallic luster composed of methine dye, xanthene dye, or the like can be used.

For the purposes of (5) and (6), ultraviolet curable resins, thermoset resins, and thermoplastic resins can be used.

The thickness of the undercoat layer is preferably 0.01 $\mu$m to 30 $\mu$m, and more preferably 0.05 $\mu$m to 10 $\mu$m.

The protective layer and the hard coat layer to be formed on a substrate surface are used for the purposes of (1) protecting a recording layer or reflection absorbing layer from suffering from scratches, dust, contamination and the like, (2) improving the storage stability of' the recording layer or reflection absorbing layer, (3) improving the reflectance, and the like.

For these purposes, the same material as used for the undercoat layer can be used. Examples of materials used for the undercoat layer include polymethyl acrylate resins, polycarbonate resins, epoxy resins, polystyrene resins, polyester resins, cellulose resins, aliphatic hydrocarbon resins, natural rubbers, styrene butadiene resins, chloroprene rubbers, waxes, alkyd resins, drying oils, and rosins. Of these, ultraviolet curable resins are particularly preferable in terms of excellence in productivity.

The thickness of the protective layer or the hard coat layer to be formed on a substrate surface is preferably 0.01 $\mu$m to 30 $\mu$m, and more preferably 0.05 $\mu$m to 10 $\mu$m.

Stabilizer, dispersing agent, flame retardant, lubricant, antistatic agent, surfactant, plasticizer and the like may be contained in the undercoat layer, the protective layer, and the hard coat layer to be formed on a substrate surface just as in the case of the recording layer.

- Second Substrate -

When the optical recording medium is irradiated with a laser beam from the protective substrate side, the second substrate must be transparent to the used laser beam, however, when the second substrate is merely used as a protective sheet plate, the second substrate is not necessarily transparent to the used laser beam. Materials usable for the protective substrate are same to the materials used for the substrate set forth above. For example, plastics such as polyester resins, acrylic resins, polyamide resins, polycarbonate resins, polyolefin resins, phenol resins, epoxy resins, and polyimide resins; or glass, ceramics, metals and the like can be used. The production cost can be reduced by using the same material to the first substrate.

< Method of producing a multilayered optical recording medium >

A method of producing such a multilayered optical recording medium having two recording layers is roughly divided into two types, namely, inverse lamination (IS) process and 2P process.

In the inverse lamination process, as shown in FIG. 1, a first recording layer L0 and a first reflective layer 202 are formed on a first substrate 201. This is called as "a first laminate". Next, on a second substrate 205, a second reflective layer 204 and a second recording layer L1 are formed. This is called as "a second laminate". Both of the laminates are bonded together with an adhesive layer 203 such that the first reflective layer 202 and the second recording layer L1 respectively constitute an external surface of a multilayered optical recording medium, i.e., such that the first reflective layer 202 and the second recording layer L1 face to each other.

In the 2P process, as shown in FIG. 2, on a first substrate 201, a first recording layer L0 and a first reflective layer 202 are formed. Next, a second recording guide groove-formed layer 203' is formed on the first reflective layer 202, a recording guide groove is formed on the second recording guide groove-formed layer 203', a second recording layer L1 and a second reflective layer 204 are formed on the recording guide groove, and a second substrate 205 is bonded to the laminate with an adhesive.

Signal information is recorded as changes in refractive index on guide grooves formed on the first recording layer L0 to the second recording layer L1.

The guide groove formed on the recording layer surface is spiral, and the direction of' the spiral groove differs between the first recording layer L0 disposed on the objective lens side and the second recording layer L1 disposed inside of the first recording layer L0. Such a phenomenon that the direction of'the spiral groove differs between the first recording layer L0 and the second recording layer L1 which is disposed inside of the first recording layer L0 is called "opposite track".

In a two-layered optical recording medium having such a structure of'opposite track, information is recorded on the first recording layer L0 from the inner circumference of the disc toward the outer circumference thereof, and in contrast, information is recorded on the second recording layer L1from the outer circumference of'the disc toward the inner circumference thereof.

In the two methods described above, there is a difference in laser beam incident direction between respective recording guide grooves provided on the first recording layer L0 and the second recording layer L1.

In the inverse lamination process, a method is employed in which as for the first recording layer L0, a recording guide groove is formed on the first substrate 201 disposed on the laser beam irradiation side, and the first recording layer L0 is formed on the first substrate 201, however, as for the second recording layer L1, a recording guide groove is formed on the second substrate 205 which is disposed on the opposite side from the laser beam irradiation side, and the second recording layer L1 is formed on the second substrate 205.

In the 2 P process, a first recording guide groove is formed on the first substrate 201 which is disposed on the laser beam irradiation side, and the first recording layer L0 is formed on the first substrate 201 Further, a second recording guide groove is formed on the second recording guide groove-formed layer 203', and the second recording layer L1 is formed on the second recording guide groove-formed layer 203'.

When the recording layer is formed by applying a liquid material containing a dye over the recording layer surface, the thickness of the recording layer varies depending on the formed concavoconvex of a recording guide groove, and the thickness of the second recording layer L1 relative to concavoconvex formed on the second recording guide groove as viewed from the laser beam irradiation side differs between the above-noted two processes. As a result, there are differences in servo conditions and the configuration of recording light beam emission patterns.

In an optical recording medium prepared by the 2P process, as shown in FIG. 2, a dye is thickly applied to the second recording guide groove, and the groove depth is deep, and thus such a groove configuration requires less amount of signals of recording marks that are recorded in the second recording guide groove flowing in the second recording guide groove. For this reason, in the 2P process, the signal amplitude measured in the second recording guide groove is small. In contrast, in an optical recording medium prepared by the inverse lamination, as shown in FIG. 1, the optical recording medium has less differences in thickness between the second recording guide groove and the recording layer thickness in the recording guide groove, and the groove depth is shallower than that of an optical recording medium prepared by the inverse lamination process, resulting in an increased amount of signals of recording marks recorded in the second recording guide groove flowing over the second recording guide groove. Accordingly, the signal amplitude measured in the second recording guide groove by the inverse lamination process is large.

In the optical recording apparatus, information is recorded on the recording surface having a guide groove (information track) called groove in which information is recorded by irradiating the optical recording medium with the main beam emitted from a light source, and information is reproduced based on the reflected light beam which is reflected from the recording surface. The optical recording apparatus is provided with an optical pickup device to apply the main beam to the recording surface of' the optical recording medium and to receive the reflected light beam from the recording surface.

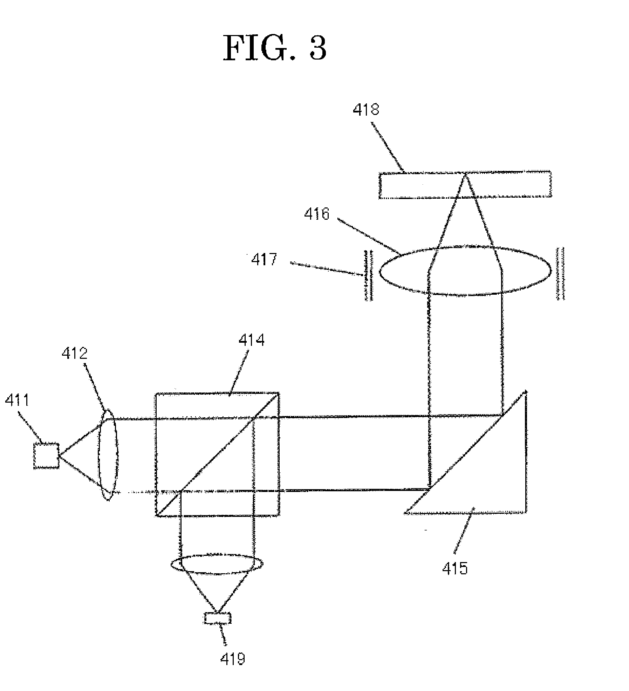

The optical pickup device is provided with at least, as shown in FIG. 3, a light source 411, an objective lens 416, an optical system configured to lead a light beam flux emitted from the light source 411 to the recording surface of an optical recording medium 418 and to lead the returned light beam flux reflected from the recording surface to a predetermined light-receiving position, and a split light receiving device 419 arranged at the light-receiving position. Signals including not only reproducing information of' data recorded on the recording surface but also necessary information such as for controlling positions of the optical pickup device itself and the objective lens 416 are output from the light receiving device, and the signals are fed back to the light receiving device and then driven and controlled by a lens actuator 417.

To accurately record data at a given position of the recording surface and to accurately reproduce the data recorded at the given position of'the recording surface, the main beam must be precisely applied to the given position of the recording surface. To this end, there is a need to precisely detect the main beam irradiation position. Then, for a method of detecting the main beam irradiation position on the recording surface, deference push-pull method which is of' a tracking servo scheme is exemplified.

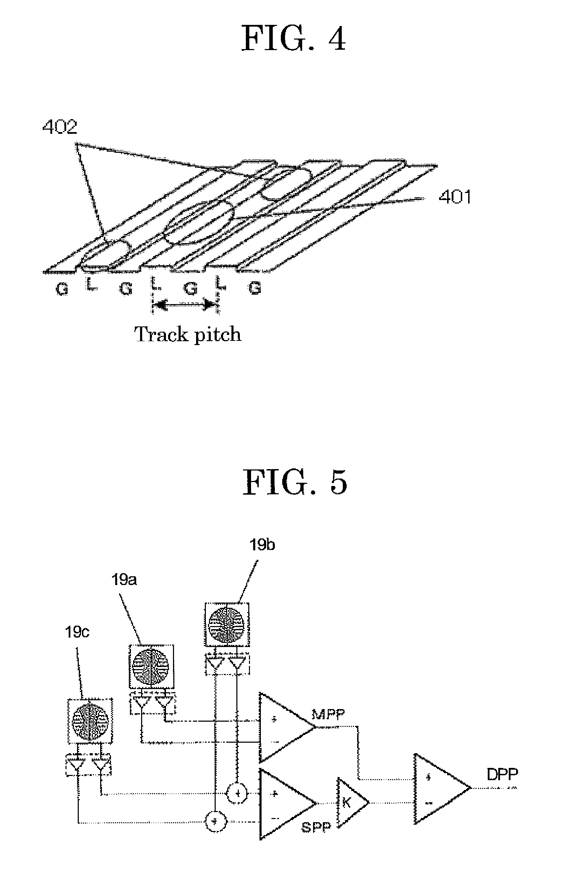

In the difference push-pull method, as shown in FIG. 4, a light beam flux emitted from a light source is divided into one main beam 401 and two sub-beams 402, and the main beam 401 and the sub-beams 402 are applied to the recording surface so as to be misaligned by 1/2 track pitch in the radial direction of the recording medium. Then, the returned light beam of the main beam 401 and the two sub-beams 402 reflected at the recording surface are respectively received by three dual-split light receiving devices 19a to 19c shown in FIG. 5 to determine a push-pull signal in respective split light receiving devices. Then, based on a differential signal between the push-pull signal (MPP) of' the main beam 1 and a sum signal of' the push-pull signals (SPP) of the two sub-beams 2, a track error signal (DPP) is detected as shown in the following Equation 1.

$$\mathrm{DPP = MPP - K\,(SPP)}$$

In the above Equation 1, K is an integer.

Then, based on the detected track error signal (DPP), so-called tracking control is performed in which an objective lens is driven in the radial direction of an optical recording medium.

In the difference push-pull method which is of a typical tracking servo scheme, a light beam irradiation site for recording (main beam) is provided in a recording guide groove, and a light beam irradiation site for scanning (sub-beam) is provided in recording guide grooves positioned on the both sides of the recording guide groove, and the main beam and the sub-beams are applied to the recording surface of an optical recording medium to scan the light beam irradiation site for recording in the recording guide groove.

When scanning the light beam irradiation site for recording with the main beam and the sub-beams, to prevent the light beams from flowing over from the light beam irradiation site for recording to the light beam irradiation site for scanning, it is necessary to ensure a distance therebetween. From this point of view, it is preferable that the light beam irradiation site for scanning is located obliquely and anteriorly to or posteriorly to the light beam irradiation site for recording.

However, for an optical recording medium in configuration in which two recording layers are formed in a laminate, and each of the recording layers has a spiral recording guide groove on the surface thereof, when one guide groove spiral of' the recording layers is formed in the opposite direction from the other guide groove spiral, and when information is recorded while rotating the optical recording medium in one direction, the recording direction to the radius of the disc turns from the inner circumference to the outer circumference or from the outer circumference to the inner circumference depending on the spiral formed on the recording layers.

At that point of'time, for the recording state of two recording guide grooves sandwiching a light beam irradiation site for scanning therebetween, it may result in a difference in combination of recorded areas or unrecorded areas. For the reason, the signal amplitude in the recording guide groove is large, an offset value is inserted to a tracking signal at the time of recording to thereby degrade the recorded state.

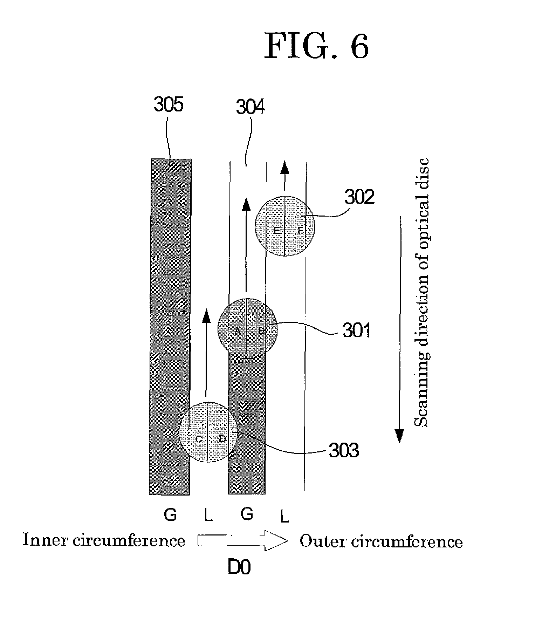

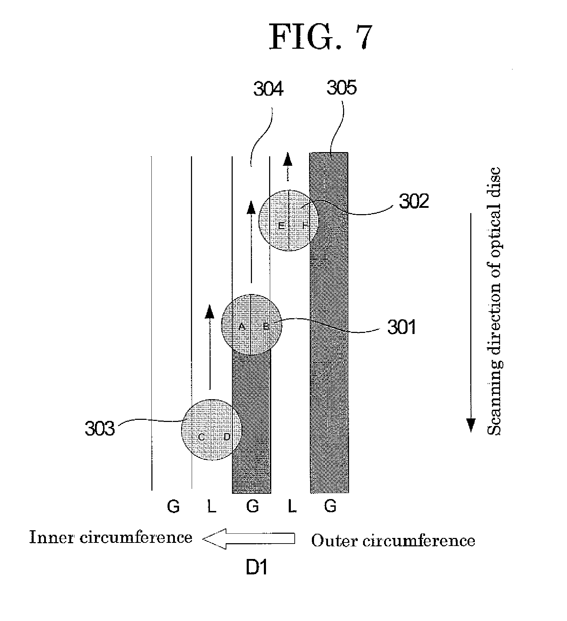

The present invention will be further described in detail referring to a two-layered optical recording medium having two recording layers as one example, with the use of FIGS. 6 and 7.

As shown in FIG. 6, when information is recorded on a first recording layer L0 with the use of the sub-beam (light beam irradiation site for scanning), the information is recorded in the D0 direction from the inner circumference to the outer circumference, and thus in the case of an optical recording apparatus which is configured that a sub-beam is set anteriorly to the main beam (light beam irradiation site for recording) as viewed from the scanning direction and outside of' the light beam irradiation site for recording relative to the radial direction of the disc and posteriorly to the light beam irradiation site for recording as viewed from the scanning direction and inside the light beam irradiation site for recording relative to the radial direction, the recorded state of both of the recording guide grooves adjacent to the light beam irradiation site for scanning are in a state of "recorded" or "unrecorded", and there is no difference in reflectance therebetween, i.e., (C - D) + (E - F) is equal to zero (0), Thus, a favorable differential push-pull signal can be obtained.

In contrast, as shown in FIG. 7, when information is recorded on a second recording layer L1, the information is recorded in the D1 direction, and thus in the second recording layer L1 with a spiral in the direction reversely to the spiral direction of' the first recording layer L0, a recording guide groove adjacent to the outside of' a sub-beam (light beam irradiation site for scanning) is in a state of "recorded", and a recording guide groove adjacent to the inside of' the light beam irradiation site for scanning is in a state of "unrecorded" to cause a difference in reflectance, i.e., (C - D) + (E - F) is not equal to zero (0). Accordingly, an offset value is inserted to a signal for the light beam irradiation site for scanning at the time of recording the second recording layer L1.

The offset value depends on the thickness of' the recording layer formed between recording guide grooves, and thus when the recording layer formed outside of the guide groove of the recording layer is thicker than the recording layer formed in the recording guide groove, in other words, an optical recording medium prepared by the inverse lamination (IS) method has a more increased offset value than that of an optical recording medium prepared by 2P method.

In addition, when the recording power at the time of recording is high, the offset value is more increased due to an increased beam diameter. When the recording power is high, the optimum signal ratio (K value) is also varied, and thus the offset value may be varied.

Thus, when the multilayered optical recording medium is a two-layered optical recording medium produced by inverse lamination, which has a first laminate having a first substrate with a spiral recording guide groove formed on a surface thereof' and at least a first recording layer formed on the first substrate, and a second laminate having a second substrate with a spiral recording guide groove formed on a surface thereof in the reverse direction to the recording guide groove of the first laminate and at least a second recording layer formed on the second substrate, and the first laminate and the second laminate are bonded such that the first substrate and the second substrate respectively constitute an external surface of the optical recording medium, and when a signal amplitude value in a recording guide groove of the second laminate determined by the determining unit is more than the specified amplitude value, the recording condition changing unit is configured to change an offset value to be inserted to a tracking error signal used at the time of recording information on the second laminate and to change a signal ratio which is a ratio between a signal generated by a reflected light from a light beam irradiation site for recording to change optical properties of'the multilayered optical recording medium and a signal generated by a reflected light from a light beam irradiation site for scanning the recording guide groove with a light beam.

In the present invention, for example, an optical recording medium prepared by inverse lamination or an optical recording medium prepared by 2P method is determined by measuring a signal amplitude in a recording guide groove using the above-noted determining unit and comparing the determined signal amplitude value to the specified amplitude value that has been preliminarily stored in the optical recording apparatus. Then, the amount of signal flowing over from the recording guide grooves is evaluated, and impact from the signal overflow can be reduced by controlling the offset value to a tracking signal.

When information is recorded using an optical recording apparatus having an light beam irradiation site for scanning (sub-beam) to scan a recording guide groove with a light beam besides the light beam irradiation site for recording (main beam) to induce changes in optical properties of the optical recording medium at the time of recording information, and the tracking signal is computed using a reflected light beam from the light beam irradiation site for recording and another reflected light beam from the light beam irradiation site for scanning in a state where only one side of guide groove is in a "recorded" state among the recording guide grooves of' adjacent both sides of a recording guide groove with information to be recorded therein, the offset value is inserted to the tracking signal in the light beam irradiation site for scanning. Further, the larger a recording signal amplitude to an light beam irradiation site for scanning, the more the offset value is.. In this case, more favorable recording operations can be achieved by controlling the offset value to a tracking signal and controlling a signal ratio between the light beam irradiation site for scanning and the light beam irradiation site for recording.

A preferable offset value and/or a preferable signal ratio vary when the offset value to the tracking signal and/or the signal ratio between the light beam irradiation site for scanning and the light beam irradiation site for recording are controlled in the inner circumference such as OPC (Optimum Power Control) site, and the output energy of the recording light beam is increased in the outer circumference to change the recording linear velocity to a higher speed. Thus, it is preferable that the offset value and/or the signal ratio are varied depending on the output energy of' the recording light beam.

An impact on the tracking signal can also be reduced by controlling an emission waveform of the recording light beam to coordinate recording marks involving less signals flowing over from a recording guide groove into recording guide grooves.

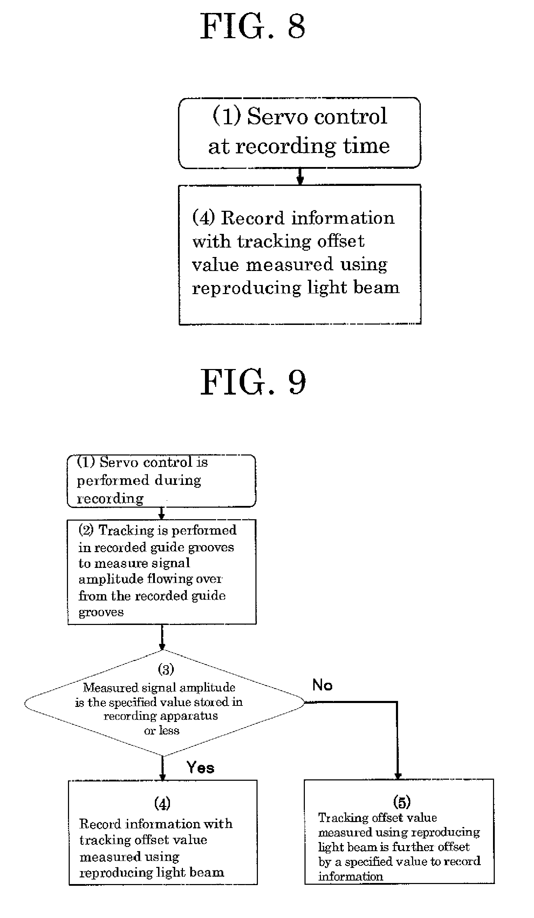

Examples of' a unit configured to change recording conditions in the recording condition changing unit include, as described above, (1) a unit configured to change an offset value to be inserted to a tracking error signal, (2) a unit configured to change the ratio between a signal generated by a reflected light beam from a light beam irradiation site for recording and a signal generated by a reflected light beam from a light beam irradiation site for scanning, and (3) a unit configured to change an emission waveform of a recording light beam are exemplified. Specifically, recording conditions can be changed as illustrated in FIGS. 9 to 12.

- (1) Change in Offset Value to be inserted to Tracking Error Signal -

As shown in FIG. 9, (1) a typical servo control is performed at the time of recording, (2) tracking is performed in a recorded guide groove, and then (3) an amplitude of signals flowing over into the recording guide groove is measured. The obtained measurement result is compared to the define amplitude value that has been preliminarily stored in the optical recording apparatus, (4) information is recorded with attacking offset value that is measured with a reproducing light beam, provided that the measured signal amplitude is the define amplitude value or less (in the case of "YES"), in the meanwhile, (5) the tracking offset value measured using the reproducing light beam is further offset by a specific value to record information, provided that the measured signal amplitude is more than the define amplitude value (in the case of "NO").

- (1') Change in Offset Value in accordance with Recording Power -

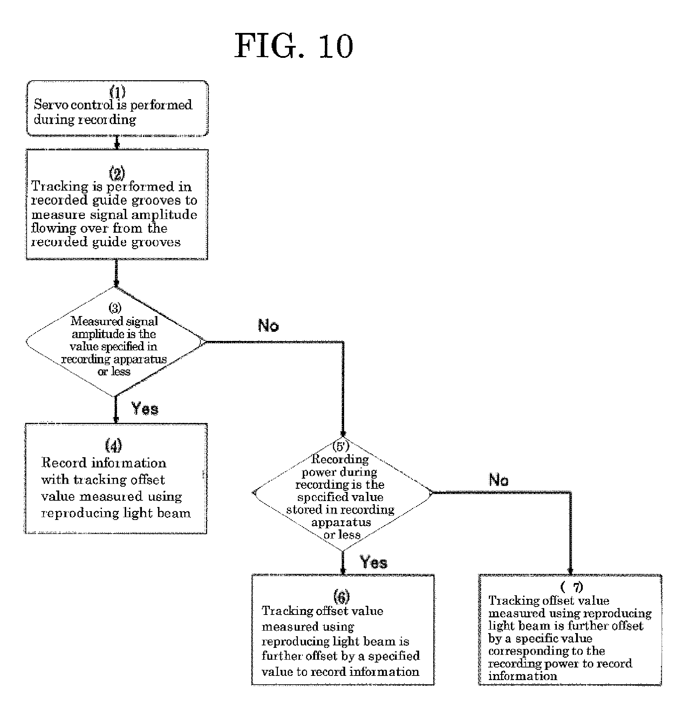

As shown in FIG. 10, statements of (1) to (4) were same to those shown in FIG. 9, however, when the measured amplitude value is more than the specified amplitude value (in the case of NO), the recording power at recording in (5') is compared to the specified recording power value that has been preliminarily stored in the optical recording apparatus, (6) the tracking offset value measured using a reproducing light beam is further offset by a specific value to record information, provided that the recording power is the preliminarily specified recording power value or less (in the case of' "YES"). In the meanwhile, the tracking offset value measured using a reproducing light beam is further offset by a specific value corresponding to the recording power to recording information, provided that the recording power is more than the preliminarily specified recording power value (in the caser of "NO").

- (1) Change in Tracking Servo Property and (2) Change in Signal Ratio (K value) -

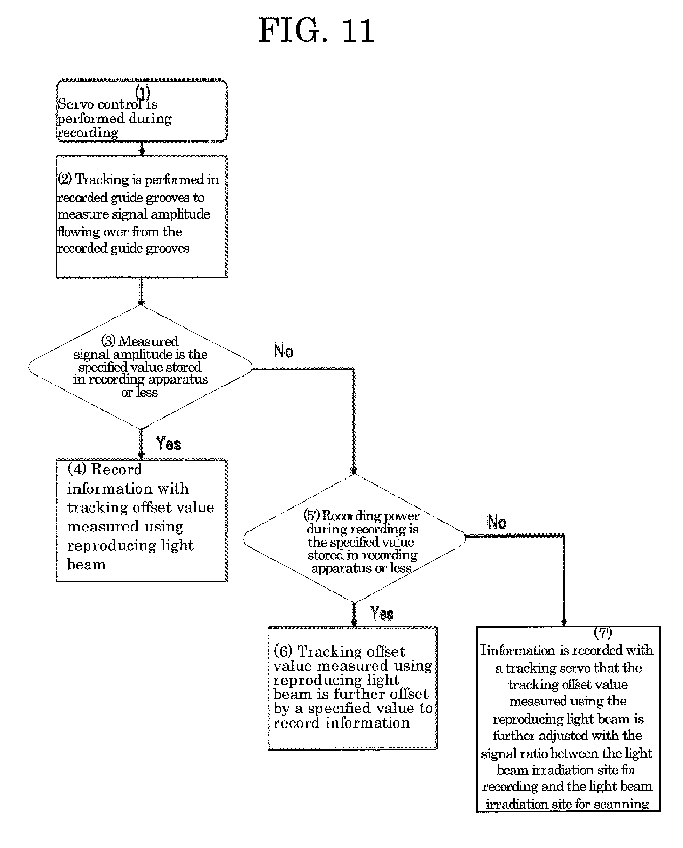

As shown in FIG. 11, the statements of (1) to (6) were same to those shown in FIG. 9, however, (7') information is recorded by tracking servo-control in which by the tracking offset value measured using a reproducing light beam is further controlled with the signal ratio between the light beam irradiation site for recording and the light beam irradiation site for scanning.

- (3) Change in Emission Waveform of recording light beam -

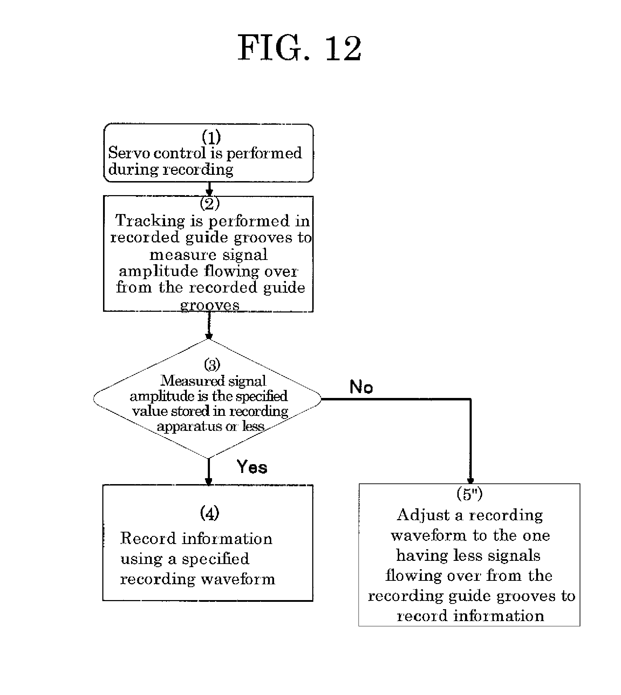

As shown in FIG. 12, the statements of (1) to (4) were same to those shown in FIG. 9, however, when the measured amplitude value is more than the preliminarily specified amplitude value (in the case of "NO"), (5") a recording waveform is coordinated so as to be a recording waveform involving less signals flowing over from the recording guide groove to thereby record information.

Hereinabove, a multilayered optical recording medium having two recording layers is exemplarily described, however, there is no essential difference between an optical recording medium having further more recording layers and an optical recording medium having two recording layers, and it is possible to achieve the present invention.

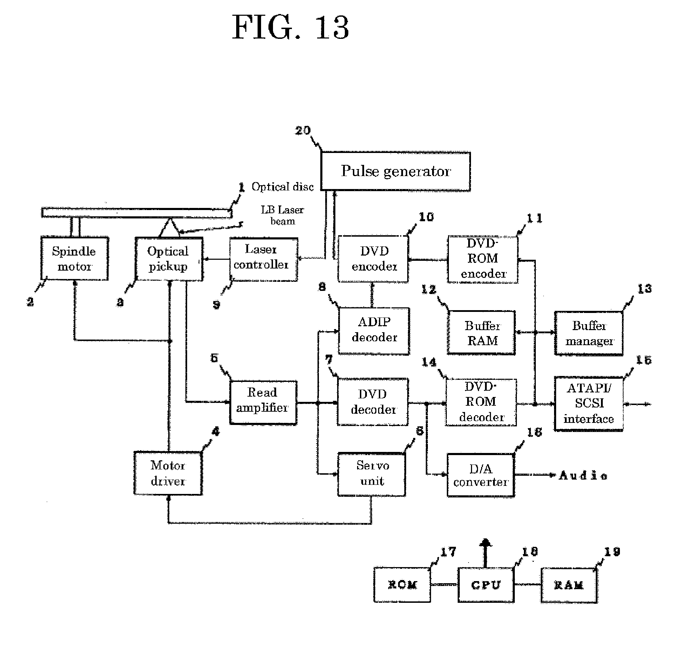

FIG. 13 is a functional block diagram exemplarily showing core parts of an optical recording apparatus The optical recording apparatus shown in FIG. 13 includes an optical recording medium 1, a spindle motor 2, an optical pickup 3 serving as in information recording unit, a motor driver 4, a read amplifier 5 serving as a determining unit, a servo unit 6 serving a a recording condition changing unit, a DVD decoder 7, an ADIP decoder 8, a laser controller 9, a DVD encoder 10, a DVD-ROM encoder 11, a buffer RAM 12, a buffer manager 13, a DVD-ROM decoder 14, an ATAPI/SCSI interface 15, a D/A converter 16, a ROM 17, a CPU 18, a RAM 19, and a pulse generator 20. In the figure, LB represents a laser beam, and Audio represents audio output signals.

In FIG. 13, the arrow marks indicate the main direction of' data flow. In order to avoid a complicated expxession in the figure, the CPU 28 that controls the respective blocks in FIG. 13 is expressed by removing the connections with the respective blocks using only wide lines. In the ROM 17, a control program written in codes that can be decoded by the CPU 18 is stored. When the power source of the optical recording apparatus is turned on, the program is loaded on a main memory (not shown), the CPU 18 controls the respective parts in accordance with the program and stores necessary data to control into the RAM 19 temporarily.

The structure and operations of the optical recording apparatus are as follows. The optical recording medium 1 is driven to rotate by the spindle motor 2. The spindle motor 2 is controlled by the motor driver 4 and the servo unit 5 such that a regular linear velocity or a regular angular velocity can be kept. The linear velocity or the angular velocity may be changed step-wise.

The optical pickup 3 incorporates a semiconductor laser, optical system, focus actuator, track actuator, receiving optics, and position sensor (not shown respectively), and irradiates the optical recording medium 1 with laser beam LB. The optical pickup 3 can be moved in a sledge direction by a seek motor. These focus actuator, track actuator and seek motor are controlled by the motor driver 4 and the servo unit 5 based on the signals from the receiving optics and the position sensor so as to situate the spot of laser beam LB on the intended site of the optical recording medium 1.

In reading stage, reproducing signals obtained by the optical pickup 3 are amplified and binarized by the read amplifier 5, and input into the DVD decoder 7. The input and binarized data is demodulated by 8/16 at the DVD decoder 7. The recording data is bundled by every 8 bits and modulated to 8/16 modulation, and 8 bits are transformed into 16 bits in the modulation. In this case, the combined bits are assigned such that the prior numbers of "1" and "0" are equal when averaged, which is referred to as "suppression of DC component" wherein the fluctuation of slice level of DC cut regeneration signals is suppressed.

The demodulated data is processed with respect to deinterleave and error collection. Then the data is input into the DVD-ROM decoder 14, and further processed with respect to error correction so as to enhance the data reliability. The data subjected to two times of error correction is stored once at the buffer RAM 12 by means of the buffer manager 13, and transferred to a host computer (not shown) at a time through the ATAPI/SCSI interface 15 in a state that is collected as sector data. In the case of music data, the data output from the DVD decoder 7 is input to the D/A converter 16 and then is taken out as audio output signals Audio of analog data.

Further, at the stage of writing, the data sent from the host computer through the ATAPI/SCSI interface 15 is stored at the buffer RAM 12 by means of the buffer manager 13 once. Then, the writing operation starts; before the writing operation, the laser spot is required to be positioned at the writing initiating site. The site is determined from wobble signals which are previously recorded with slightly sinusoidal waves of tracks on the optical recording medium 1 in the case of DVD+RW/+R.

Further, the site is determined by land pre-pits in the case of' DVD-RW/-R, by pre-pits in the case of DVD-RW/RAM WO in place of' wobble signals.

The wobble signals in DVD RW/+R discs contain address information of so-called ADIP (ADress In Pre-groove), and the address information is retrieved by the ADIP decoder 8. The synchronous signals generated by the ADIP decoder 8 are input to the DVD encoder 10, which enables to write data at correct sites on the optical recording medium 1. The data stored in the buffer RAM 12 is subjected to addition of error correction code and/or an interleaving operation by the DVD-ROM encoder 11 and/or the DVD encoder 10, then is recorded into the optical recording medium 1 by the use of a recording waveform according to the present invention via the laser controller 9 and the optical pickup 3.. To correct efficiency of the optical pickup, it is possible to directly measure a diffracted light beam of the recording light beam using a light-receiving device to change the recording power of the laser controller 9 according to the recording power change. For a method of correcting the recording power to the optical recording medium 1, it is possible to measure the efficiency of'the recording power relative to the optical recording medium 1 based on the variations of reflected light beam emitted after recording to correct the recording power of the laser controller 9. For the method of controlling the address information, it may be a configuration in which address information is retrieved from land pre-pits or pre-pits.

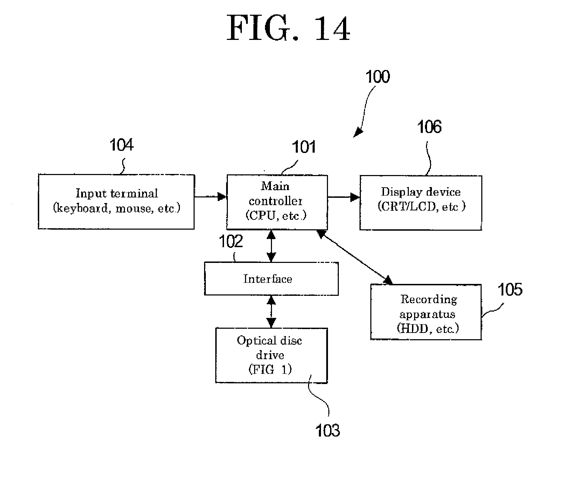

FIG. 14 is a view schematically showing an information processing unit 100 utilizing the optical recording apparatus shown in FIG. 13. Information processing unit 100 is equipped with main controller 101, interface 102, optical recording apparatus 103, input device 104, and display device 106, and the like.

The main controller 101 is constituted by a CPU (central processing unit, micro computer), main memory, and the like (respectively not shown), and controls the entire host computer.

Interface 102 is a communication interface interactive with optical recording apparatus, and is based on standard interfaces such as ATAPI and CSI. The interface 102 is connected to interface 15 of the optical recording apparatus described above. The connection between the respective interfaces may be not only cable connection by means of communication line or cable such as SCSI cable but also wireless connection utilizing infrared ray, for example.

In a recording apparatus 105 (hardware recording medium HDD, etc), programs described with codes which are readable with a microcomputer incorporated in the main controller 101 are stored. The driving power source of the information processing unit is turned on, the programs are loaded on the main memory of the main controller 101.

A display device 106 is equipped with display parts (not shown) such as CRT, liquid crystal display (LCD), plasma display panel (PDP) to display various information from the main controller.

An input device 104 is equipped with at least one input medium (not shown) such as keyboard, mouse, and pointing device to inform the main controller of the various information input by users. Information from the input medium may be input based on wireless scheme. As an integrated combination of' a display device and an input device, for example, a CRT equipped with a touch panel is exemplified.

The information processing unit 100 carries an operating system (OS). Then, all the devices constituting the information processing unit 100 are controlled by the operating system (OS).

The present invention can provide an optical recording apparatus by which optimum recording can be achieved by controlling impacts of configuration differences of' optical recording media which are attributable to differences in methods of producing optical recording media on servo signals.

EXAMPLES

Hereafter, the present invention will be further described in detail referring to specific Examples and Comparative Examples, however, the present invention is not limited to the disclosed

Examples.

< Evaluation on Optical Recording Medium and Performance >

A DVD+R disc (optical recording medium A) produced by inverse lamination as shown in FIG. 10 and a DVD+R disc (optical recording medium B) produced by 2P method as shown in FIG. 11 were prepared for evaluation.

For the optical recording medium A, the signal amplitude in recording guide groove was 70% relative to the reflectance. For the optical recording medium B, the signal amplitude in recording guide groove was 30% relative to the reflectance.

Next, these two optical recording media A and B were evaluated in terms of success or failure of recording and reproducing operations when information was recorded on optical recording apparatuses of' Examples 1 to 4 and Comparative Example 1 at 2.4X recording speed and 8X recording speed Tables 1 and 2 show the evaluation results.

In Examples 1 to 4, optical recording apparatuses each having a recording condition changing unit illustrated respectively in any one of FIGS. 9 to 12 were used. In Comparative Example 1, an optical recording apparatus having a unit as illustrated in FIG. 8 was used.

(Comparative Example 1)

In Comparative Example 1, as shown in FIG. 8, (1) a typical servo control was performed at the time of recording, and then (4) information was recorded with a tracking offset value measured using a reproducing light beam.

(Example 1)

In Example 1, as shown in FIG. 9, (1) a typical servo control was performed at the time of recording, and then (2) tracking was performed in a recorded guide groove to (3) measure the amplitude of signals flowing into recording guide grooves. The measured signal amplitude was compared to a specified amplitude value that had been preliminarily stored in the optical recording apparatus, and when the measured amplitude was the specified amplitude value or less (in the case of "YES"), (4) information was recorded with the tracking offset value measured using a reproducing light beam. In the meanwhile, when the measured signal amplitude was more than the specified amplitude value (in the case of "NO"), (5) the tracking offset value measured using the reproducing light beam was further offset by a specified value to record information.

(Example 2)

In Example 2, as shown in FIG. 10, the statements of (1) to (4) were same to those shown in Example 1, however, when the measured signal amplitude was more than the specified amplitude value (in the case of "NO"), (5') the recording power at the time of recording was compared to a specified recording power value that had been preliminarily stored in the optical recording apparatus, and when the recording power was the specified recording power value or less (in the case of YES), (6) the tracking offset value measured using a reproducing light beam was further offset by a specified value to record information. In the meanwhile, when the recording power was more than the specified recording power value (in the case of "NO"), (7) the tracking offset value measured using the reproducing light beam was further offset by a specified value corresponding to the recording power to record information.

(Example 3)

In Example 3, as shown in FIG.. 11, the statements of (1) to (6) were same to those shown in Example 2, however, when the recording power was more than the specified recording power value (in the caser of "NO"), (7') information was recorded with a tracking servo that the tracking offset value measured using the reproducing light beam was further adjusted with the signal ratio between the light beam irradiation site for recording and the light beam irradiation site for scanning.

(Example 4)

In Example 4, as shown in FIG. 12, the statements of (1) to (4) were same to those shown in Example 1, however, when the measured signal amplitude value was more than the specified amplitude value (in the case of "NO"), (5") the recording waveform was coordinated so as to be a recording waveform involving less signals overflowing from recording guide grooves.

- Success or Failure of recording and reproducing operations at 2.4X speed-

Table 1

| | Optical recording medium A produced by inverse lamination | Optical recording medium B produced by 2P method |
|---|---|---|
| Ex. 1 | Recordable and reproducible | Recordable and reproducible |
| Ex. 2 | Recordable and reproducible | Recordable and reproducible |
| Ex. 3 | Recordable and reproducible | Recordable and reproducible |
| Ex. 4 | Recordable and reproducible | Recordable and reproducible |
| Compara Ex. 1 | L1 Record error | Recordable and reproducible |

The results shown in Table 1 verified that information could be recorded and reproduced on all the optical recording media A and optical recording media B of Examples 1 to 4. In contrast, in Comparative Example1, the tracking servo property was unsuitable to the optical recording medium A to cause a recording error.

- Success and Failure of recording and reproducing operations at 8X speed -

Table 2

|  | Optical recording medium A produced by inverse lamination | Optical recording medium B produced by 2P method |
|---|---|---|
| Ex. 1 | L1 Recording error | Recordable and reproducible |
| Ex. 2 | Recordable and reproducible | Recordable and reproducible |
| Ex. 3 | Recordable and reproducible | Recordable and reproducible |
| Ex. 4 | L1 Recording error | Recordable and reproducible |
| Compara Ex. 1 | L1 Record error | Recordable and reproducible |

The results shown in Table 2 verified that information could be recorded and reproduced on all the optical recording media B, however, when the recording velocity or recording power was increased with high-speed recording, the recording conditions were corrected. In other words, the optical recording media of Example 2 were set to have a tracking offset value to a 30% increased as compared to that used at 2.4X recording speed. The optical recording media of' Example 3 were set to have a signal ratio between a light beam irradiation site for recording and a light beam irradiation site for scanning to be half of the signal ratio used at 2.4X recording speed. From these evaluation results, it was verified that only the optical recording media of Examples 2 and 3 were recordable and reproducible at high-speed recording.

The optical recording apparatus of the present invention can be used for recording on DVDs which are writable once such as DVD-RAM-WO, DVDR, and DVD+R, and DVDs which are writable two or more times such as DVD-RAM, DVD-RW, and DVD+RW, and is particularly suitable for a multilayered optical recording medium having two or more recording layers.

**Claims**

1.   An optical recording apparatus, comprising:

an information recording unit configured to record information in recording guide grooves formed on a surface of an optical recording medium by irradiating the optical recording medium while scanning the recording guide grooves with a light beam to change optical properties of the optical recording medium,
a determining unit configured to determine a signal amplitude in the recording guide grooves to determine whether or not the determined signal amplitude is more than a specified amplitude value which has been preliminarily stored in the optical recording apparatus, and
a recording condition changing unit configured to change recording conditions of the information recording unit when the determined signal amplitude is determined as being more than the specified amplitude value.

2.   The optical recording medium according to claim 1, wherein a site irradiated with the light beam used when scanning the recording guide grooves is set so as to cover the recording guide grooves.

3.   The optical recording apparatus according to any one of claims 1 to 2, wherein the recording condition changing unit is configured to change the servo property at the time of recording.

4.   The optical recording apparatus according to claim 3, wherein the recording condition changing unit is configured to change the tracking servo property at the time of recording.

5.   The optical recording apparatus according to claim 4, wherein the recording condition changing unit is configured to change the offset value to be inserted to a tracking error signal at the time of' recording.

6.   The optical recording apparatus according to claim 5, wherein the information recording unit is configured to record information by changing the recording power of a recording light beam used during recording, and the recording condition changing unit is configured to change an offset value to be inserted to the tracking error signal used during recording is changed in accordance with the recording power.

7. The optical recording apparatus according to claim 4, wherein the recording condition changing unit is configured to change a signal ratio which is a ratio between a signal generated by a reflected light from the light beam irradiation site for recording to change optical properties of an optical recording medium when information is recorded thereon and a signal generated by a reflected light from the light beam irradiation site for scanning the recording guide grooves with the light beam.

8. The optical recording apparatus according to claim 7, wherein the information recording unit is configured to record information by changing the recording power of the recording light beam used during recording, and the recording condition changing unit is configured to change the signal ratio in accordance with the recording power.

9. The optical recording apparatus according to any one of claims 1 to 2, wherein the recording condition changing unit is configured to change an emission waveform used for the recording light beam.

10. The optical recording apparatus according to any one of claims 1 to 9, wherein the optical recording medium is a multilayered optical recording medium having two or more recording layers.

11. The optical recording apparatus according to claim 10, wherein the multilayered optical recording medium comprises a first laminate having a first substrate with a spiral recording guide groove formed on a surface thereof and at least a first recording layer formed on the first substrate, and a second laminate having a second substrate with a spiral recording guide groove formed on a surface thereof in the reverse direction to the recording guide groove of' the first laminate and at least a second recording layer formed on the second substrate, and the first laminate and the second laminate are bonded such that the first substrate and the second substrate respectively constitute an external surface of the optical recording medium; and when a signal amplitude value in a recording guide groove of the second laminate determined by the determining unit is more than the specified amplitude value, the recording condition changing unit is configured to change an offset value to be inserted to a tracking error signal used at the time of recording information on the second laminate and to change a signal ratio which is a ratio between a signal generated by a reflected light from a light beam irradiation site for recording to change optical properties of' the multilayered optical recording medium and a signal generated by a reflected light from a light beam irradiation site for scanning the recording guide groove with a light beam.

# FIG. 1

205

204

L1

203

202

L0

201

Direction of laser beam irradiation

# FIG. 2

205

204

L1

203'

202

L0

201

Direction of laser beam irradiation

# FIG. 3

# FIG. 4

402

401

G L G L G L G

Track pitch

# FIG. 5

19b

19a

19c

MPP

SPP

K

DPP

# FIG. 6

305

304

302

301

303

Scanning direction of optical disc

G   L   G   L

Inner circumference ⟹ Outer circumference

D0

# FIG. 7

# FIG. 8

> (1) Servo control
> at recording time

> (4) Record information
> with tracking offset
> value measured using
> reproducing light beam

# FIG. 9

> (1) Servo control is
> performed during
> recording

> (2) Tracking is performed
> in recorded guide grooves
> to measure signal
> amplitude flowing over
> from the recorded guide
> grooves

> (3)
> Measured signal amplitude
> is the specified value stored in
> recording apparatus
> or less

**No**

**Yes**

> (4)
> Record information with
> tracking offset value
> measured using
> reproducing light beam

> (5)
> Tracking offset value
> measured using reproducing
> light beam is further offset
> by a specified value to record
> information

# FIG. 10

(1)
Servo control is performed during recording

↓

(2)
Tracking is performed in recorded guide grooves to measure signal amplitude flowing over from the recorded guide grooves

↓

(3)
Measured signal amplitude is the value specified in recording apparatus or less

**No** →

**Yes** ↓

(4)
Record information with tracking offset value measured using reproducing light beam

(5')
Recording power during recording is the specified value stored in recording apparatus or less

**No** →

**Yes** ↓

(6)
Tracking offset value measured using reproducing light beam is further offset by a specified value to record information

( 7)
Tracking offset value measured using reproducing light beam is further offset by a specific value corresponding to the recording power to record information

# FIG. 11

Servo control is performed during recording (1)

↓

(2) Tracking is performed in recorded guide grooves to measure signal amplitude flowing over from the recorded guide grooves

↓

(3) Measured signal amplitude is the specified value stored in recording apparatus or less

— No →

**Yes** ↓

(4) Record information with tracking offset value measured using reproducing light beam

(5') Recording power during recording is the specified value stored in recording apparatus or less

— No →

**Yes** ↓

(6) Tracking offset value measured using reproducing light beam is further offset by a specified value to record information

(7') Iinformation is recorded with a tracking servo that the tracking offset value measured using the reproducing light beam is further adjusted with the signal ratio between the light beam irradiation site for recording and the light beam irradiation site for scanning

# FIG. 12

(1)
Servo control is performed
during recording

(2)
Tracking is performed in
recorded guide grooves to
measure signal
amplitude flowing over
from the recorded guide
grooves

(3)
Measured signal
amplitude is the specified
value stored in recording
apparatus or less

**No**

**Yes**

(4)

Record information
using a specified
recording waveform

(5")
Adjust a recording
waveform to the one
having less signals
flowing over from the
recording guide grooves to
record information

# FIG. 13

# FIG. 14

100

104

101

106

Input terminal
(keyboard, mouse, etc.)

Main
controller
(CPU, etc.)

Display device
(CRT/LCD, etc.)

102

Interface

105

Recording
apparatus
(HDD, etc.)

Optical disc
drive
(FIG. 1)

103

))) European Patent
Office

**EUROPEAN SEARCH REPORT**

Application Number

EP 07 10 4225

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 927 993 A (MITSUMI ELECTRIC CO [JP]) 7 July 1999 (1999-07-07) <br> * paragraphs [0013], [0015] * <br> * paragraph [0039] - paragraph [0040] * <br> * paragraph [0323] - paragraph [0340] * <br> * figures 33,36 * | 1-4,7 | INV. <br> G11B7/09 |
| A | US 5 539 710 A (TOKUSHUKU NOBUHIRO [JP] ET AL) 23 July 1996 (1996-07-23) <br> * column 9, line 35 - line 48 * <br> * column 9, line 60 - line 67 * <br> * column 10, line 10 - line 18 * | 1-10 | |
| A | US 2004/013057 A1 (AOE TAKASHI [JP] ET AL) 22 January 2004 (2004-01-22) <br> * paragraphs [0012], [0049], [0050]; figures 9,10 * | 1-10 | |
| D,A | JP 2002 197658 A (SHARP KK) 12 July 2002 (2002-07-12) <br> * abstract * | 1-10 | TECHNICAL FIELDS SEARCHED (IPC) <br><br> G11B |

The present search report has been drawn up for all claims

| Place of search | Date of completion of the search | Examiner |
|---|---|---|
| The Hague | 22 May 2007 | Demoor, Kristoffel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 07 10 4225

This annex lists the patent family members relating to the patent documents cited in the above-mentioned European search report.
The members are as contained in the European Patent Office EDP file on
The European Patent Office is in no way liable for these particulars which are merely given for the purpose of information.

22-05-2007

| Patent document cited in search report | | Publication date | Patent family member(s) | | Publication date |
|---|---|---|---|---|---|
| EP 0927993 | A | 07-07-1999 | AU<br>AU<br>US | 762881 B2<br>9826698 A<br>6606286 B1 | 10-07-2003<br>22-07-1999<br>12-08-2003 |
| US 5539710 | A | 23-07-1996 | JP | 5242603 A | 21-09-1993 |
| US 2004013057 | A1 | 22-01-2004 | JP<br>JP | 3879060 B2<br>2003208723 A | 07-02-2007<br>25-07-2003 |
| JP 2002197658 | A | 12-07-2002 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002197658 A